# EUROPÄISCHE PATENTSCHRIFT

(11) **EP 2 673 860 B1**
(45) Veröffentlichungstag und Bekanntmachung des Hinweises auf die Patenterteilung: **22.02.2017**
(21) Anmeldenummer: 11802962.8
(22) Anmeldetag: 29.12.2011
(51) Int. Cl.: H02J 1/00, H02J 7/00, B60L 11/18, H02M 5/00, H02M 7/00, H02P 7/00, H02J 7/02

(54) **LADEN EINES ENERGIESPEICHERS**
CHARGING AN ENERGY-STORING ARRANGEMENT
CHARGER UN DISPOSITIF DE STOCKAGE D'ENERGIE

(30) Priorität: 09.02.2011 DE 102011003859
(43) Veröffentlichungstag der Anmeldung: 18.12.2013
(73) Patentinhaber: Robert Bosch GmbH, 70442 Stuttgart (DE)
(72) Erfinder: FEUERSTACK, Peter, 71642 Ludwigsburg (DE); WEISSENBORN, Erik, 70374 Stuttgart (DE); KESSLER, Martin, 73527 Schwaebisch Gmuend (DE)
(86) Internationale Anmeldenummer: PCT/EP2011/074217
(87) Internationale Veröffentlichungsnummer: WO 2012/107147

(56) Entgegenhaltungen:
- DE-A1- 10 252 800
- DE-A1-102006 009 312
- DE-B3-102004 030 912
- US-A- 5 504 414
- US-A- 6 049 194

## Beschreibung

Die Erfindung betrifft ein System zum Laden eines Energiespeichers und ein Verfahren zum Betrieb des erfindungsgemäßen Ladesystems.

### Stand der Technik

Es zeichnet sich ab, dass in Zukunft sowohl bei stationären Anwendungen, wie z.B. Windkraftanlagen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren. In herkömmlichen Anwendungen wird eine elektrische Maschine, welche z.B. als Drehfeldmaschine ausgeführt ist, über einen Umrichter in Form eines Wechselrichters gesteuert. Kennzeichnend für derartige Systeme ist ein sogenannter Gleichspannungszwischenkreis, über welchen ein Energiespeicher, in der Regel eine Batterie, an die Gleichspannungsseite des Wechselrichters angeschlossen ist. Um die für eine jeweilige Anwendung gegebenen Anforderungen an Leistung und Energie erfüllen zu können, werden mehrere Batteriezellen in Serie geschaltet. Da der von einem derartigen Energiespeicher bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen.

Die Serienschaltung mehrerer Batteriezellen bringt neben einer hohen Gesamtspannung das Problem mit sich, dass der gesamte Energiespeicher ausfällt, wenn eine einzige Batteriezelle ausfällt, weil dann kein Batteriestrom mehr fließen kann. Ein solcher Ausfall des Energiespeichers kann zu einem Ausfall des Gesamtsystems führen. Bei einem Fahrzeug kann ein Ausfall der Antriebsbatterie zum "Liegenbleiben" des Fahrzeugs führen. Bei anderen Anwendungen, wie z.B. der Rotorblattverstellung von Windkraftanlagen, kann es bei ungünstigen Rahmenbedingungen, wie z.B. starkem Wind, sogar zu sicherheitsgefährdenden Situationen kommen. Daher ist stets eine hohe Zuverlässigkeit des Energiespeichers anzustreben, wobei mit "Zuverlässigkeit" die Fähigkeit eines Systems bezeichnet wird, für eine vorgegebene Zeit fehlerfrei zu arbeiten.

In den älteren Anmeldungen DE 10 2010 027857 und DE 10 2010 027861 sind Batterien mit mehreren Batteriemodulsträngen beschrieben, welche direkt an eine elektrische Maschine anschließbar sind. Die Batteriemodulstränge weisen dabei eine Mehrzahl von in Serie geschalteten Batteriemodulen auf, wobei jedes Batteriemodul mindestens eine Batteriezelle und eine zugeordnete steuerbare Koppeleinheit aufweist, welche es erlaubt in Abhängigkeit von Steuersignalen den jeweiligen Batteriemodulstrang zu unterbrechen oder die jeweils zugeordnete mindestens eine Batteriezelle zu überbrücken oder die jeweils zugeordnete mindestens eine Batteriezelle in den jeweiligen Batteriemodulstrang zu schalten. Durch geeignete Ansteuerung der Koppeleinheiten, z.B. mit Hilfe von Pulsweitenmodulation, können auch geeignete Phasensignale zur Steuerung der elektrischen Maschine bereitgestellt werden, so dass auf einen separaten Pulswechselrichter verzichtet werden kann. Der zur Steuerung der elektrischen Maschine erforderliche Pulswechselrichter ist damit sozusagen in die Batterie integriert. Zum Zwecke der Offenbarung werden diese beiden älteren Anmeldungen vollumfänglich in die vorliegende Anmeldung einbezogen.

Offenbarung der Erfindung

Die Erfindung ist in den unabhängigen Ansprüchen definiert. Bevorzugte Ausführungsformen ergeben sich aus den abhängigen Ansprüchen.

### Vorteile der Erfindung

Sollen die Energiespeicherzellen des steuerbaren Energiespeichers über einen Ladetransformator geladen werden, so muss die an der Sekundärseite (Sekundärwicklung) eines Ladetransformators anliegende Wechselspannung zunächst gleichgerichtet werden. Die Erfindung basiert auf der Grundidee, die Schaltelemente der als Vollbrücken ausgestalteten Koppeleinheiten zur Gleichrichtung der sekundärseitigen Wechselspannung der Ladetransformatoren zu nutzen. Dazu werden die Sekundärseiten der Lade-Transformatoren über jeweils eine Lade-Induktivität mit den Energieversorgungszweigen des steuerbaren Energiespeichers verbunden. Die Spannung an der Lade-Induktivität ergibt sich als Differenz zwischen einer Sekundärspannung an der Sekundärseite des Lade-Transformators und der Spannung am steuerbaren Energiespeicher. Realisiert wird die Gleichrichterfunktion nun dadurch, dass die Energiespeicherzellen jeweils mit derjenigen Polarität in den jeweiligen Energieversorgungszweig geschaltet werden, dass sie geladen werden. Dabei wird in einer Stromaufbauphase in den Energieversorgungszweigen eine betragsmäßig geringere Spannung als an der Sekundärseite des Lade-Transformators eingestellt, so dass den Ladeinduktivitäten Energie zugeführt und dort gespeichert wird. In einer der Stromaufbauphase folgenden Stromabbauphase wird in den Energieversorgungszweigen eine betragsmäßig höhere Spannung als an der Sekundärseite des Lade-Transformators eingestellt, wodurch der Ladestrom insgesamt begrenzt wird. Die Spannung in den Energieversorgungszweigen wird dabei jeweils durch die Anzahl der in den jeweiligen Energieversorgungszweig geschalteten Energiespeicherzellen bestimmt. Über beide Phasen, also Stromaufbauphase und Stromabbauphase, hinweg, ergibt sich auf diese Weise insgesamt ein konstanter Ladestrom.

Der Wegfall einer gesonderten Gleichrichtereinheit auf der Sekundärseite des Lade-Transformators führt sowohl zu einer Kosten- als auch zu einer Bauraumersparnis. Einige Schaltnetztopologien, wie beispielsweise eine sogenannte "Dual Active Bridge", erfordern ebenfalls eine steuerbare Vollbrücke auf der Sekundärseite eines Transformators. Derartige Schaltnetztopologien lassen sich mit Hilfe der erfindungsgemäßen Anordnung ebenfalls realisieren.

Um im Falle einer direkten Anbindung der Sekundärseite des Lade-Transformators über zusätzliche Ladeinduktivitäten an die Energieversorgungszweige einen Kurzschluss im motorischen Betrieb der elektrischen Maschine zu verhindern, sind steuerbare Schaltelemente vorgesehen, durch welche die Sekundärseite des Ladetransformators im Ladebetrieb mit den Energieversorgungszweigen verbunden werden können und im Motorbetrieb der elektrischen Maschine von diesen getrennt werden können.

Gemäß einer Ausführungsform der Erfindung weist der Lade-Transformator n Sekundärwicklungen auf, welche jeweils einerseits mit einem Energieversorgungszweig und andererseits mit der Bezugsschiene verbindbar sind.

Alternativ dazu können die Energieversorgungszweige auch über die jeweilige zusätzliche Ladeinduktivität mit der Sekundärseite eines jeweils zugeordneten Lade-Transformators verbindbar sein.

Die Lade-Transformatoren stellen in diesem Fall unsymmetrische Spannungsquellen dar, was zur Erzeugung unerwünschter Drehmomente in der elektrischen Maschine führen kann. Insbesondere bei einer derartigen Beschaltung ist es daher sinnvoll, weitere steuerbare Schaltelemente vorzusehen, durch welche die elektrische Maschine von den Energieversorgungszweigen abtrennbar ist.

Alternativ oder zusätzlich können unerwünschte Momente während des Ladevorgangs auch dadurch vermieden werden, dass die elektrische Maschine während des Ladevorgangs mechanisch blockiert wird, z.B. mit Hilfe einer Getriebesperrklinke. Alternativ kann auch die Rotorlage der elektrischen Maschine überwacht werden, z.B. mit Hilfe einer entsprechenden Sensorik, und im Falle einer detektierten Rotorbewegung abgeschaltet werden.

Das erfindungsgemäße Ladesystem ist galvanisch getrennt ausgeführt und kann auch als induktives Ladegerät ausgeführt sein, d.h. alle Komponenten vom Netzeingang bis zur Primärwicklung können sich in einem Offboard-Ladegerät befinden und der Transformator kann entsprechend modifiziert, das heißt flächig ausgeführt werden. Beim Einsatz in einem Fahrzeug ergibt sich daraus der Vorteil, dass außer der Sekundärwicklung des Lade-Transformators keine zusätzlichen Bauteile zur Realisierung der Ladefunktion im Fahrzeug mitgeführt werden müssen.

Weitere Merkmale und Vorteile von Ausführungsformen der Erfindung ergeben sich aus der nachfolgenden Beschreibung mit Bezug auf die beigefügten Zeichnungen.

Kurze Beschreibung der Zeichnungen
- Fig. 1: eine schematische Darstellung einer ersten Ausführungsform eines erfindungsgemäßen Ladesystems und
- Fig. 2: eine schematische Darstellung einer zweiten Ausführungsform eines erfindungsgemäßen Ladesystems.

### Ausführungsformen der Erfindung

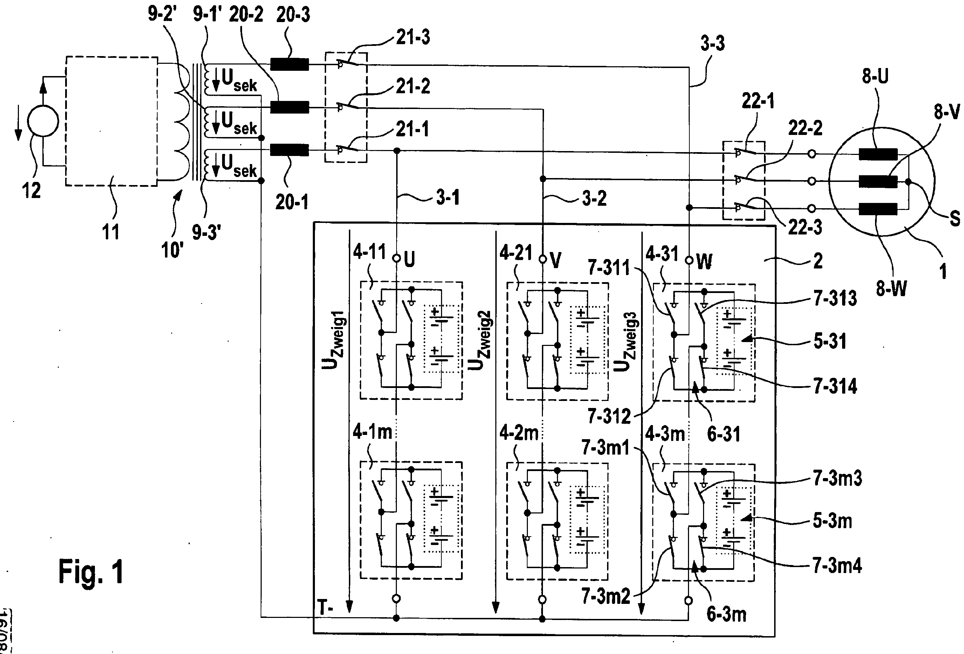

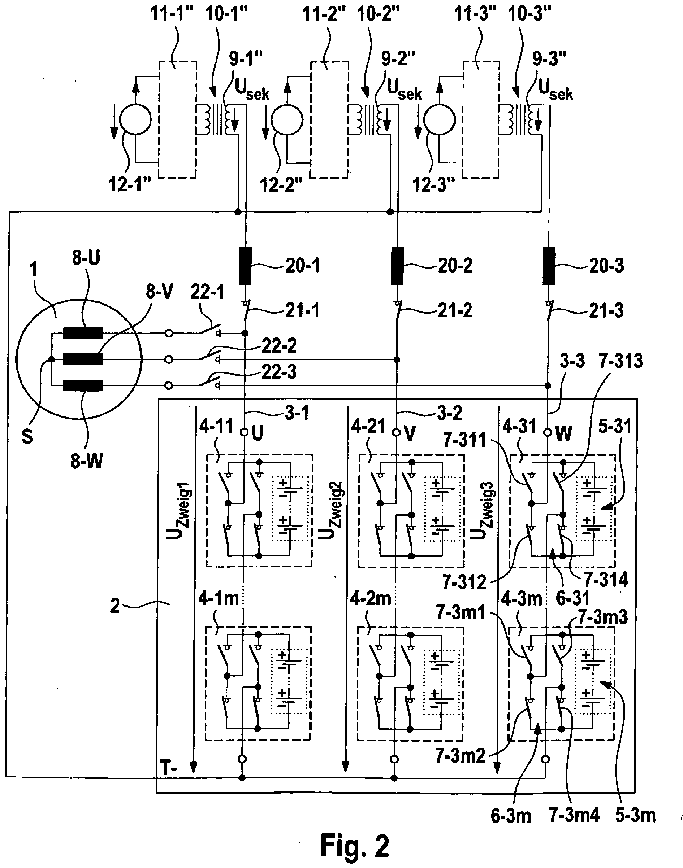

Die Figuren 1 und 2 zeigen schematische Darstellungen von Ausführungsformen eines erfindungsgemäßen Ladesystems. An eine dreiphasige elektrische Maschine 1 ist ein steuerbarer Energiespeicher 2 angeschlossen. Der steuerbare Energiespeicher 2 umfasst drei Energieversorgungszweige 3-1, 3-2 und 3-3, welche einerseits mit einem Bezugspotential T- (Bezugsschiene), welches in den dargestellten Ausführungsformen ein niedriges Potential führt, und andererseits jeweils mit einzelnen Phasen U, V, W der elektrischen Maschine 1 verbunden sind. Jeder der Energieversorgungszweige 3-1, 3-2 und 3-3 weist m in Reihe geschaltete Energiespeichermodule 4-11 bis 4-1 m bzw. 4-21 bis 4-2m bzw. 4-31 bis 4-3m auf, wobei m ≥ 2. Die Energiespeichermodule 4 wiederum umfassen jeweils mehrere in Reihe geschaltete elektrische Energiespeicherzellen, welche aus Gründen der Übersichtlichkeit lediglich in dem mit der Phase W der elektrischen Maschine 1 verbundenen Energieversorgungszweig 3-3 mit Bezugszeichen 5-31 bis 5-3m versehen sind. Die Energiespeichermodule 4 umfassen des Weiteren jeweils eine Koppeleinheit, welche den Energiespeicherzellen 5 des jeweiligen Energiespeichermoduls 4 zugeordnet ist. Aus Gründen der Übersichtlichkeit sind auch die Koppeleinheiten lediglich in dem Energieversorgungszweig 3-3 mit Bezugszeichen 6-31 bis 6-3m versehen. In den dargestellten Ausführungsvarianten werden die Koppeleinheiten 6 jeweils durch vier steuerbare Schaltelemente 7-311, 7-312, 7-313 und 7-314 bis 7-3m1, 7-3m2, 7-3m3 und 7-3m4 gebildet, welche in Form einer Vollbrücke verschaltet sind. Die Schaltelemente können dabei als Leistungshalbleiterschalter, z.B. in Form von IGBTs (Insulated Gate Bipolar Transistors) oder als MOSFETs (Metal Oxide Semiconductor Field-Effect Transistors), ausgeführt sein.

Die Koppeleinheiten 6 ermöglichen es, den jeweiligen Energieversorgungszweig 3, durch Öffnen aller Schaltelemente 7 einer Koppeleinheit 6 zu unterbrechen. Alternativ können die Energiespeicherzellen 5 durch Schließen von jeweils zwei der Schaltelemente 7 einer Koppeleinheit 6 entweder überbrückt werden, z.B. Schließen der Schalter 7-312 und 7-314 oder in den jeweiligen Energieversorgungszweig 3 geschaltet werden, z.B. Schließen der Schalter 7-312 und 7-313.

Die Gesamt-Ausgangsspannungen der Energieversorgungszweige 3-1 bis 3-3 werden bestimmt durch den jeweiligen Schaltzustand der steuerbaren Schaltelemente 7 der Koppeleinheiten 6 und können stufig eingestellt werden. Die Stufung ergibt sich dabei in Abhängigkeit von der Spannung der einzelnen Energiespeichermodule 4. Geht man von der bevorzugten Ausführungsform gleichartig ausgestalteter Energiespeichermodule 4 aus, so ergibt sich eine maximal mögliche Gesamt-Ausgangsspannung aus der Spannung eines einzelnen Energiespeichermoduls 4 mal der Anzahl m der pro Energieversorgungszweig 3 in Reihe geschalteten Energiespeichermodule 4.

Die Koppeleinheiten 6 erlauben es damit, die Phasen U, V, W der elektrischen Maschine 1 entweder gegen ein hohes Bezugspotential oder ein niedriges Bezugspotential zu schalten und können insofern auch die Funktion eines bekannten Wechselrichters erfüllen. Damit können Leistung und Betriebsart der elektrischen Maschine 1 bei geeigneter Ansteuerung der Koppeleinheiten 6 durch den steuerbaren Energiespeicher 2 gesteuert werden. Der steuerbare Energiespeicher 2 erfüllt also insofern eine Doppelfunktion, da er einerseits der elektrischen Energieversorgung andererseits aber auch der Steuerung der elektrischen Maschine 1 dient.

Die elektrische Maschine 1 weist Statorwicklungen 8-U, 8-V und 8-W auf, die in bekannter Weise in Sternschaltung miteinander verschaltet sind.

Die elektrische Maschine 1 ist in den dargestellten Ausführungsbeispielen als dreiphasige Drehstrommaschine ausgeführt, kann aber auch weniger oder mehr als drei Phasen aufweisen. Nach der Phasenanzahl der elektrischen Maschine richtet sich natürlich auch die Anzahl der Energieversorgungszweige 3 in dem steuerbaren Energiespeicher 2.

In den dargestellten Ausführungsbeispielen weist jedes Energiespeichermodul 4 jeweils mehrere in Reihe geschaltete Energiespeicherzellen 5 auf. Die Energiespeichermodule 4 können aber alternativ auch jeweils nur eine einzige Energiespeicherzelle oder auch parallel geschaltete Energiespeicherzellen aufweisen.

In den dargestellten Ausführungsbeispielen werden die Koppeleinheiten 6 jeweils durch vier steuerbare Schaltelemente 7 in Form einer Vollbrücke gebildet, was auch die Möglichkeit einer Spannungsumkehr am Ausgang des Energiespeichermoduls bietet Die Koppeleinheiten 6 können aber auch durch mehr oder weniger steuerbare Schaltelemente realisiert sein, solange die notwendigen Funktionen (Überbrücken der Energieversorgungszellen und Schalten der Energieversorgungszellen in den Energieversorgungszweig) realisierbar sind.

Um die Ladung von Energiespeicherzellen 5 eines oder mehrerer Energiespeichermodule 4 zu ermöglichen, wird gemäß einer in Figur 1 dargestellten ersten Ausführungsform der Erfindung ein Lade-Transformator 10' über zusätzliche Ladeinduktivitäten 20 direkt mit den Energieversorgungszweigen 3 des steuerbaren Energiespeichers 2 verbunden.

Der Ladetransformator 10' weist sekundärseitig drei Sekundärwicklungen 9-1'; 9-2' und 9-3' auf, welche einerseits über jeweils eine der Ladeinduktivitäten 20-1 bzw. 20-2 bzw. 20-3 mit dem Energieversorgungszweig 3-1 bzw. 3-2 bzw. 3-3 verbindbar sind und andererseits mit der Bezugsschiene T- verbunden sind. Um im motorischen Betrieb der elektrischen Maschine 1 einen Kurzschluss der Energieversorgungszweige 3 über die Ladeinduktivitäten 20 und die Sekundärwicklungen 9' zu vermeiden, sind in den Verbindungsleitungen zwischen den Sekundärwicklungen 9' und den Energieversorgungszweigen 3 jeweils steuerbare Schaltelemente 21-1, 21-2 und 21-3 angeordnet. Diese ermöglichen es auch, die Sekundärwicklungen 9' und die Ladeinduktivitäten 20 von den Energieversorgungszweigen 3 zu trennen.

Primärseitig ist dem Lade-Transformator 10 eine Schalteinheit 11, z.B. in Form eine Halb- oder Vollbrücke vorgeschaltet, welche die Primärseite des Lade-Transformators 10 mit einer Wechselspannungsquelle 12 verbindet.

An den Sekundärwicklungen 9' des Lade-Transformators 10' liegt jeweils eine Wechselspannung an, welche gleichgerichtet werden muss, um als Ladespannung für eine oder mehrere Energiespeicherzellen 5 des steuerbaren Energiespeichers 2 dienen zu können. Mit Hilfe der in Vollbrückentopologie ausgestalteten Koppeleinheiten 6 des steuerbaren Energiespeichers 2 ist es nun möglich, die Gleichrichtungsfunktion ohne eine separate Gleichrichtereinheit zu realisieren. Dazu werden die zu ladenden Energiespeicherzellen 5 durch entsprechende Steuerung der Schaltelemente 7 der jeweils zugeordneten Koppeleinheit 6 mit jeweils der Polarität in den jeweiligen Energieversorgungszweig 3 geschaltet, dass sie geladen werden.

Zur Ladung der Energiespeicherzellen 5 sind darüber hinaus Lade-Induktivitäten erforderlich, welche durch die zusätzlichen Ladeinduktivitäten 20 gebildet werden.

Eine Spannung U_{L} über einer Ladeinduktivität 20-1, 20-2, 20-3 ergibt sich als Differenz zwischen einer Sekundärspannung Uₛₑₖ auf der Sekundärseite des Lade-Transformators 10 und einer Strangspannung U_{Zweig1} bzw. U_{Zweig2} bzw. U_{Zweig3} an dem jeweils zugeordneten Energieversorgungszweig 3-1 bzw. 3-2 bzw. 3-3. Die Ladung von Energiespeicherzellen 5 erfolgt in zwei Phasen.

In einer Stromaufbauphase muss die Spannung U_{L} positiv sein (UL > 0), um Ladeenergie in der jeweiligen Lade-Induktivität 20-1 bzw. 20-2 bzw. 20-3 zu speichern. Dies kann erreicht werden, indem am jeweiligen Energieversorgungszweig 3 eine betragsmäßig geringere Spannung als die Sekundärspannung Uₛₑₖ eingestellt wird (|U_{Zweig}| < |Uₛₑₖ|). Die Strangspannung U_{Zweig} ist abhängig von der Anzahl der zugeschalteten Energiespeicherzellen 5 in dem jeweiligen Energieversorgungszweig 3 und kann somit durch gezieltes Zu- und/oder Wegschalten von Energiespeicherzellen 5 mit Hilfe der Koppeleinheiten 6 aktiv beeinflusst werden. Dabei kann auch der Gradient des Ladestroms über die jeweils eingestellte Strangspannung U_{Zweig} gesteuert werden.

Um den Ladestrom nicht beliebig ansteigen zu lassen, folgt der Stromaufbauphase eine Stromabbauphase, in welcher die Spannung U_{L} negativ ist (UL < 0), so dass die in der jeweiligen Ladeinduktivität 20 gespeicherte Energie wieder abgegeben wird. Dies kann erreicht werden, indem am jeweiligen Energieversorgungszweig 3 eine betragsmäßig höhere Spannung als die Sekundärspannung Uₛₑₖ eingestellt wird (|U_{Zweig}| > |Uₛₑₖ|). Auch dieses Spannungsverhältnis wird wiederum durch gezieltes Zu- und/oder Wegschalten von Energiespeicherzellen 5 mit Hilfe der Koppeleinheiten 6 eingestellt.

Über beide Phasen, also Stromaufbau- und Stromabbauphase hinweg, ergibt sich dadurch ein konstanter Ladestrom.

Sollten die Ladespannungen Uₛₑₖ unsymmetrisch sein, können sich unerwünschte Momente in der elektrischen Maschine 1 aufbauen. Zur Vermeidung derartiger Momente während des Ladevorgangs können weitere steuerbare Schaltelemente 22-1, 22-2 und 22-2 vorgesehen sein, durch welche die elektrische Maschine 1 von den Energieversorgungszweigen 3-1 bzw. 3-2 bzw. 3-3 abtrennbar ist.

Alternativ oder zusätzlich können unerwünschte Momente während des Ladevorgangs auch dadurch vermieden werden, dass die elektrische Maschine 1 während des Ladevorgangs mechanisch blockiert wird, z. B. mit Hilfe einer Getriebesperrklinke. Alternativ kann auch die Rotorlage der elektrischen Maschine 1 überwacht werden, z.B. mit Hilfe einer entsprechenden Sensorik, und im Falle einer detektierten Rotorbewegung abgeschaltet werden.

Alternativ zu einem Lade-Transformator mit mehreren Sekundärwicklungen kann selbstverständlich auch für jeden Energieversorgungszweig 3-1, 3-2 und 3-3 ein eigener Ladetransformator 10-1" bzw. 10-2" bzw. 10-3" mit jeweils zugeordneter Schalteinheit 11" und Wechselspannungsquelle 12" vorgesehen sein (Figur 2). In diesem Fall ist die Verbindung der Sekundärwicklungen 9-1", 9-2" und 9-3" mit der Bezugsschiene T-lediglich optional. Ansonsten unterscheidet sich diese dritte Ausführungsform hinsichtlich ihres Aufbaus und ihre Funktionalität nicht von der ersten Ausführungsform gemäß Figur 1.

## Patentansprüche

1. System zum Laden einer Energiespeicherzelle (5) eines steuerbaren Energiespeichers (2), welcher der Steuerung und der elektrischen Energieversorgung einer n-phasigen elektrischen Maschine (1), mit n ≥ 1, dient, umfassend:
- n parallele Energieversorgungszweige (3-1, 3-2, 3-3) des Energiespeichers (2), welche jeweils zwei in Reihe geschaltete Energiespeichermodule (4) aufweisen, welche jeweils eine elektrische Energiespeicherzelle (5) mit einer zugeordneten und als Vollbrücke ausgestalteten Koppeleinheit (6) mit steuerbaren Schaltelementen (7) aufweisen, wobei die n parallelen Energieversorgungszweige (3-1, 3-2, 3-3) einerseits mit einer Bezugsschiene (T-) verbindbar sind und andererseits mit jeweils einer Phase (U, V, W) der elektrischen Maschine (1) verbindbar sind, und
- einen Lade-Transformator (10'; 10-1"; 10-2"; 10-3"), welcher Sekundärwicklungen (9-1'; 9-1"; 9-2'; 9-2"; 9-3'; 9-3") aufweist,
**gekennzeichnet durch**
- eine Ladeinduktivität (20-1; 20-2; 20-3), welche in den Verbindungsleitungen zwischen den n parallelen Energieversorgungszweigen (3-1, 3-2, 3-3) und den Sekundärwicklungen (9-1'; 9-1"; 9-2'; 9-2"; 9-3'; 9-3") des Lade-Transformators (10'; 10-1 "; 10-2"; 10-3") angeordnet ist, und
- ein weiteres steuerbares Schaltelement (21-1; 21-2; 21-3), wobei die n parallelen Energieversorgungszweige (3-1, 3-2, 3-3) **durch** das weitere steuerbare Schaltelement (21-1; 21-2; 21-3) mit jeweils einer der Sekundärwicklungen (9-1'; 9-1"; 9-2'; 9-2"; 9-3'; 9-3") des Lade-Transformators (10'; 10-1"; 10-2"; 10-3") zum Laden verbindbar und von diesem trennbar sind.

2. System nach Anspruch 1, wobei der Lade-Transformator (10') sekundärseitig n Sekundärwicklungen (9-1'; 9-2'; 9-3') aufweist, welche jeweils einerseits mit einem der n Energieversorgungszweige (3-1; 3-2; 3-3) und andererseits mit der Bezugsschiene (T-) verbindbar sind.

3. System nach Anspruch 1, wobei die Energieversorgungszweige (3-1, 3-2; 3-3) über die Ladeinduktivität (20-1; 20-2; 20-3) mit der Sekundärwicklung (9-1"; 9-2"; 9-3") des jeweils den Energieversorgungszweigen (3-1, 3-2; 3-3) zugeordneten Lade-Transformators (10-1"; 10-2"; 10-3") verbindbar sind.

4. System nach einem der Ansprüche 2 oder 3, wobei die elektrische Maschine (1) über steuerbare Schaltelemente (22-1, 22-2, 22-3) von den Energieversorgungszweigen (3-1, 3-2, 3-3) trennbar ist.

5. Verfahren zum Betreiben eines Ladesystems nach einem der Ansprüche 1 bis 4, **dadurch gekennzeichnet, dass**
- ein System nach einem der Ansprüche 1 bis 4 bereit gestellt wird und
- in einer Stromaufbauphase in den Energieversorgungszweigen (3-1, 3-2; 3-3) eine betragsmäßig geringere Spannung als an der Sekundärseite des Lade-Transformators (10'; 10-1"; 10-2"; 10-3") eingestellt wird und
- in einer der Stromaufbauphase folgenden Stromabbauphase in den Energieversorgungszweigen (3-1, 3-2; 3-3) eine betragsmäßig höhere Spannung als an der Sekundärseite des Lade-Transformators (10'; 10-1"; 10-2"; 10-3") eingestellt wird.

6. Verfahren nach Anspruch 5, **dadurch gekennzeichnet, dass** in der Stromaufbauphase oder in der Stromabbauphase die als Vollbrücke ausgestalteten Koppeleinheiten (6) in Abhängigkeit von Steuersignalen die jeweils zugeordneten Energiespeicherzellen (5) überbrücken oder die jeweils zugeordneten Energiespeicherzellen (5) in den jeweiligen Energieversorgungszweig (3-1, 3-2; 3-3) schalten.

## Claims

1. System for charging an energy storage cell (5) of a controllable energy store (2) which is used to control and supply electrical energy to an n-phase electrical machine (1), where n ≥ 1, comprising:
- n parallel energy supply branches (3-1, 3-2, 3-3) of the energy store (2) which each have two energy storage modules (4) which are connected in series and each have an electrical energy storage cell (5) having an associated coupling unit (6) which is configured as a full bridge and has controllable switching elements (7), wherein the n parallel energy supply branches (3-1, 3-2, 3-3) can be connected on one side to a reference rail (T-) and can be connected on the other side to in each case one phase (U, V, W) of the electrical machine (1), and
- a charging transformer (10'; 10-1''; 10-2"; 10-3") which has secondary windings (9-1'; 9-1''; 9-2'; 9-2"; 9-3'; 9-3"),
**characterized by**
- a charging inductance (20-1; 20-2; 20-3) which is arranged in the connection lines between the n parallel energy supply branches (3-1, 3-2, 3-3) and the secondary windings (9-1'; 9-1"; 9-2'; 9-2"; 9-3'; 9-3") of the charging transformer (10'; 10-1"; 10-2"; 10-3"), and
- a further controllable switching element (21-1; 21-2; 21-3), wherein the n parallel energy supply branches (3-1, 3-2, 3-3) can be connected to in each case one of the secondary windings (9-1'; 9-1"; 9-2'; 9-2"; 9-3'; 9-3") of the charging transformer (10'; 10-1"; 10-2"; 10-3") by means of the further controllable switching element (21-1; 21-2; 21-3) for the purpose of charging and can be isolated from said charging transformer.

2. System according to Claim 1, wherein the charging transformer (10') has n secondary windings (9-1', 9-2', 9-3') on the secondary side, which secondary windings can in each case be connected on one side to one of the n energy supply branches (3-1, 3-2, 3-3) and on the other side to the reference rail (T-).

3. System according to Claim 1, wherein the energy supply branches (3-1, 3-2, 3-3) can be connected to the secondary winding (9-1", 9-2", 9-3") of the charging transformer (10-1", 10-2", 10-3") respectively associated with the energy supply branches (3-1, 3-2, 3-3) via the charging inductance (20-1, 20-2, 20-3).

4. System according to either of Claims 2 and 3, wherein the electrical machine (1) can be isolated from the energy supply branches (3-1, 3-2, 3-3) by means of controllable switching elements (22-1, 22-2, 22-3).

5. Method for operating a charging system according to one of Claims 1 to 4, **characterized in that**,
- a system according to one of Claims 1 to 4 is provided and
- in a current increase stage in the energy supply branches (3-1, 3-2, 3-3), a voltage which is smaller in terms of magnitude than that at the secondary side of the charging transformer (10', 10-1", 10-2", 10-3") is set and
- in a current reduction stage following the current increase stage in the energy supply branches (3-1, 3-2, 3-3), a voltage which is greater in terms of magnitude than that at the secondary side of the charging transformer (10', 10-1", 10-2", 10-3") is set.

6. Method according to Claim 5, **characterized in that**, in the current increase stage or in the current reduction stage, the coupling units (6) configured as a full bridge bridge the respectively associated energy storage cells (5) or connect the respectively associated energy storage cells (5) into the respective energy supply branch (3-1, 3-2; 3-3) on the basis of control signals.

## Revendications

1. Système pour le chargement d'une cellule accumulatrice d'énergie (5) d'un accumulateur d'énergie (2) pouvant être commandé, qui est utilisé pour la commande et l'alimentation en énergie électrique d'une machine électrique à n phases (1), avec n ≥ 1, comprenant :
- n branches d'alimentation en énergie parallèles (3-1, 3-2, 3-3) de l'accumulateur d'énergie (2), qui comportent respectivement deux modules accumulateurs d'énergie connectés en série (4), comportant respectivement une cellule accumulatrice d'énergie électrique (5) à laquelle est associée une unité de couplage (6) et conçue sous la forme d'un pont complet comportant des éléments de commutation pouvant être commandés (7), dans lequel les n branches d'alimentation en énergie parallèles (3-1, 3-2, 3-3) peuvent respectivement être connectées d'une part à un rail de référence (T-) et d'autre part à une phase (U, V, W) de la machine électrique (1), et
- un transformateur de charge (10' ; 10-1" ; 10-2" ; 10-3") qui comporte des enroulements secondaires (9-1' ; 9-1" ; 9-2' ; 9-2" ; 9-3' ; 9-3"), **caractérisé par**
- une inductance de charge (20-1 ; 20-2 ; 20-3) disposée dans les lignes de connexion entre les n branches d'alimentation en énergie parallèles (3-1, 3-2, 3-3) et les enroulements secondaires (9-1' ; 9-1" ; 9-2' ; 9-2" ; 9-3' ; 9-3") du transformateur de charge (10' ; 10-1" ; 10-2" ; 10-3"), et
- un autre élément de commutation pouvant être commandé (21-1 ; 21-2 ; 21-3), dans lequel les n branches d'alimentation en énergie parallèles (3-1, 3-2, 3-3) peuvent respectivement être connectées pour la charge par l'autre élément de commutation pouvant être commandé (21-1 ; 21-2 ; 21-3) à l'un des enroulements secondaires (9-1' ; 9-1" ; 9-2' ; 9-2" ; 9-3' ; 9-3") du transformateur de charge (10' ; 10-1" ; 10-2" ; 10-3") et peuvent en être séparées.

2. Système selon la revendication 1, dans lequel le transformateur de charge (10') comporte, côté secondaire, n enroulements secondaires (9-1' ; 9-2' ; 9-3') qui peuvent respectivement être connectés d'une part à l'une des n branches d'alimentation en énergie (3-1 ; 3-2 ; 3-3) et d'autre part au rail de référence (T-).

3. Système selon la revendication 1, dans lequel les branches d'alimentation en énergie (3-1, 3-2 ; 3-3) peuvent être connectées par l'intermédiaire de l'inductance de charge (20-1 ; 20-2 ; 20-3) à l'enroulement secondaire (9-1" ; 9-2" ; 9-3") du transformateur de charge (10-1" ; 10-2" ; 10-3") respectivement associé aux branches d'alimentation en énergie (3-1, 3-2 ; 3-3).

4. Système selon l'une des revendications 2 ou 3, dans lequel la machine électrique (1) peut être séparée des branches d'alimentation en énergie (3-1, 3-2, 3-3) par l'intermédiaire d'éléments de commutation (22-1, 22-2, 22-3) pouvant être commandés.

5. Procédé de mise en fonctionnement d'un système de charge selon l'une quelconque des revendications 1 à 4, **caractérisé en ce que**
- un système selon l'une quelconque des revendications 1 à 4 est fourni et **en ce que**
- lors d'une phase de croissance du courant, une tension plus faible en amplitude que du côté secondaire du transformateur de charge (10' ; 10-1" ; 10-2" ; 10-3") est établie dans les branches d'alimentation en énergie (3-1, 3-2 ; 3-3) et
- lors d'une phase de décroissance du courant faisant suite à la phase phase de croissance du courant, une tension plus élevée en amplitude que du côté secondaire du transformateur de charge (10' ; 10-1" ; 10-2" ; 10-3") est établie dans les branches d'alimentation en énergie (3-1, 3-2 ; 3-3).

6. Procédé selon la revendication 5, **caractérisé en ce que**, lors de la phase de croissance du courant ou lors de la phase de décroissance du courant, les unités de couplage (6) réalisées sous la forme de ponts complets établissent un pont entre les cellules accumulatrices d'énergie (5) respectivement associées en fonction de signaux de commande ou commutent les cellules accumulatrices d'énergie (5) respectivement associées dans les branches d'alimentation en énergie (3-1, 3-2 ; 3-3).
